Europäisches Patentamt

(19) European Patent Office

Office européen des brevets

(11) Publication number: **0 284 410**
**B1**

(12) EUROPEAN PATENT SPECIFICATION

(45) Date of publication of the patent specification:
13.06.90

(51) Int. Cl.⁵: **F02K 9/64**

(21) Application number: 88302661.9

(22) Date of filing: 25.03.88

(54) Combustors for rocket engine burners.

(30) Priority: 26.03.87 JP 70230/87

(43) Date of publication of application:
28.09.88 Bulletin 88/39

(45) Publication of the grant of the patent:
13.06.90 Bulletin 90/24

(84) Designated Contracting States:
DE FR GB IT SE

(56) References cited:
DE-B- 1 019 865
GB-A- 759 901
US-A- 3 249 989

(73) Proprietor: **DIRECTOR GENERAL OF INSTITUTE OF SPACE AND ASTRONAUTICAL SCIENCE,**
**No. 6-1, 4-chome Komaba, Meguro-ku Tokyo(JP)**
Proprietor: **ISHIKAWAJIMA-HARIMA JUKOGYO KABUSHIKI KAISHA, 2-1, Ote-machi 2-chome, Chiyoda-ku Tokyo 100(JP)**

(72) Inventor: **Horiuchi, Ryo, No. 2-1-J-2-01, Benten, Urayasu-shi Chiba-ken(JP)**
Inventor: **Saito, Satoshi, No. 2-11-404, Wakabadai Asahi-ku, Yokohama-shi Kanagawa-ken(JP)**
Inventor: **Suzuki, Koichi, No. 835-17, Kamiarai, Tokorozawa-shi Saitama-ken(JP)**
Inventor: **Higashino, Kazuyuki, No. 16-49, Unoki, Sayama-shi Saitama-ken(JP)**

(74) Representative: **Rees, David Christopher et al, Kilburn & Strode 30 John Street, London WC1N 2DD(GB)**

## Description

The present invention relates to a combustor and nozzle arrangement for a high pressure burner for a rocket engine of regenerative cooling type and a method of fabricating such a burner.

One known combustor and nozzle arrangement of the type described above is disclosed in GB-A 759 901. This comprises a stack of abutting coaxial rings, each having longitudinally arranged coolant ducts which are in register with one another in the stack. The outer peripheries of the rings engage an outer coaxial shell whilst the inner peripheries are shaped to form the combustor and nozzle.

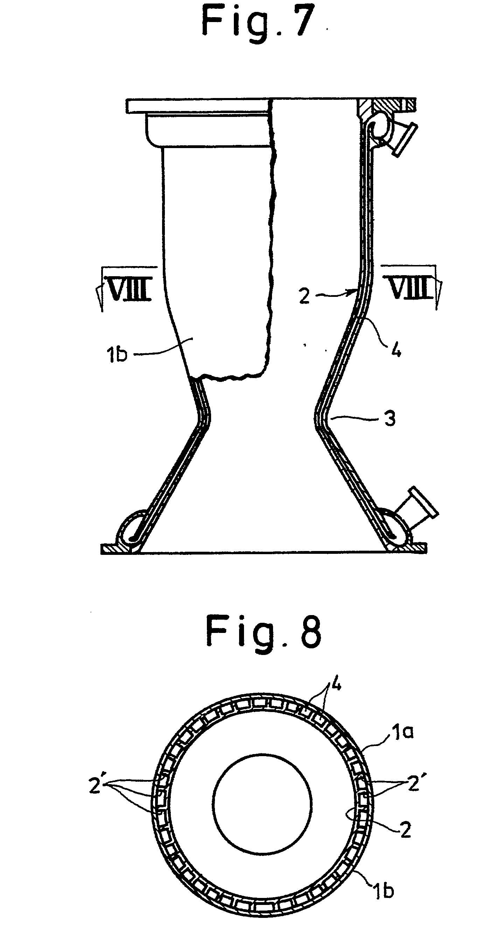

Figures 7 and 8 of the accompanying drawings are a partly cut away side elevation of another conventional combustor and nozzle and a sectional view on the line VIII–VIII in Figure 7, respectively. The combustor and nozzle of a high pressure burner for a regenerative cooling type rocket engine shown in these Figures comprises an inner tube 2 defining a nozzle throat 3 and spaced from a similarly shaped outer tube. A plurality of projections 2' extend radially from the outer surface of the inner tube 2 to define regenerative coolant passages 4. Due to the presence of the throat 3 which is of reduced diameter, the outer tube comprises two divided semi-cylindrical outer tubes 1a and 1b, which are fitted over the inner tube 2 and connected to it at the projections 2' so as to be able to sustain pressure in the passages 4 and the combustion pressure.

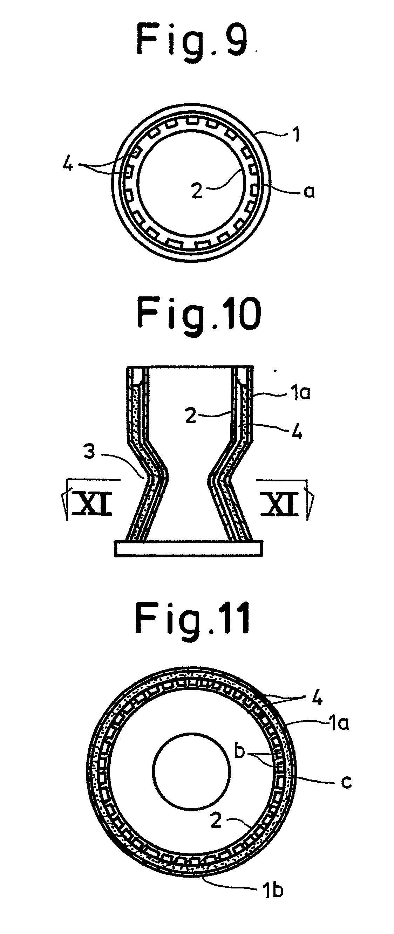

A conventional combustor and nozzle of the type described above may be fabricated by electroforming, powder infiltration, cold isostatic pressing (CIP method), the diffused junction or diffusion bonding method or the like. Figures 9 to 14 illustrate various known methods of fabricating such a combustor and nozzle arrangement.

When fabricating a combustor and nozzle by electroforming, regenerative coolant grooves or passages 4 are machined in the outer periphery of the inner tube 2, which is made of copper alloy. Copper is electroformed on an intermediate plated layer made of Cu, Ag, Mo, Au or the like over the outer periphery of the inner tube 2, so as to define the outer tube 1, as shown in Figure 9. The combustor and nozzle arrangement is then subjected to various tests.

A method of fabricating a combustor and nozzle by powder infiltration is shown in Figures 10 and 11, in which Figure 10 is a sectional side elevation of the combustor and nozzle and Figure 11 is a sectional view on the line XI–XI in Figure 10. An inner copper tube 2 is formed at its outer periphery with regenerative coolant grooves 4 into which a water-soluble material b is filled. Two divided semi-cylindrical stainless-steel outer tubes 1a and 1b are fitted over the inner tube 2 with the interposition of a copper powder layer c and the whole structure is heated to melt the copper powder layer so as to join the outer tubes 1a and 1b with the inner tube 2. The semi-cylindrical outer tubes 1a and 1b are thus securely joined together. The combustor and nozzle arrangement is again subjected to various tests.

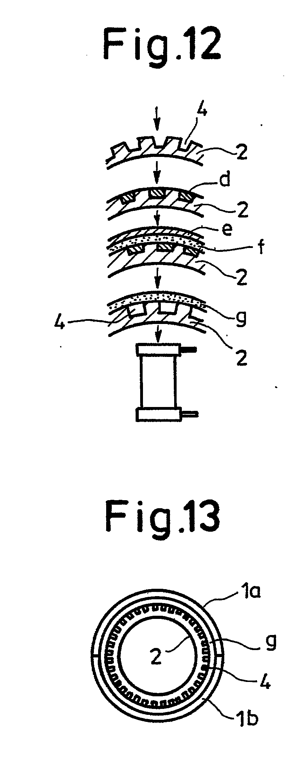

A method of fabricating a combustor and nozzle by cold isostatic pressing (CIP method) is shown in Figures 12 and 13, in which Figure 12 is a scrap diagrammatic view showing the various stages of the method and Figure 13 is a plan view of the completed combustor and nozzle. An alloy d having a low melting point is filled into each of the regenerative coolant grooves 4 on the inner tube 2 and a rubber mould e is fitted over the tube 2. Copper powder f is then filled into the space defined between the mould e and the inner tube 2. After completion of the isostatic pressing, the low-melting alloy d is removed and then a sintering process is performed to form a copper sintered tube g. Next two divided semi-cylindrical outer tubes 1a and 1b are fitted over the tube g and are connected together by welding or the like. The combustor and nozzle arrangement is again subjected to various tests.

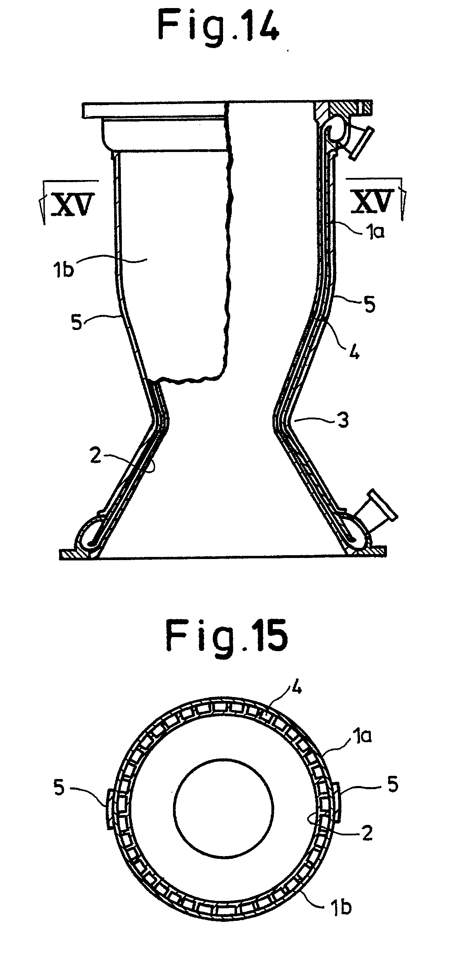

A method of fabricating a combustor and nozzle by diffusion bonding is shown in Figures 14 and 15, in which Figure 14 is a partly broken away side elevation of the combustor and nozzle and Figure 15 is a sectional view on the line XV–XV in Figure 14. Two divided outer tubes 1a and 1b are fitted over the inner tube 2 with regenerative coolant grooves 4 machined therein and then the inner and outer tubes are tightened by jigs disposed on the sides of the inner and outer tubes, respectively. Argon gas is introduced into the combustor and nozzle and the coolant grooves and the whole structure is heated in a heat-treatment furnace so that due to the forces produced by the difference in thermal expansion between the inner and outer jigs and the pressure of the argon gas the inner tube 2 and the outer tubes 1a and 1b are deformed and rigidly connected together. Thus, due to the mutual diffusion of metal atoms in the vicinity of the points of engagement, the inner tube 2 and the outer tubes 1a and 1b are integrally joined together. Thereafter, a joint band 5 is fitted around the junction between the outer tubes 1a and 1b and is welded to them.

In all the conventional combustor and nozzle arrangements, except those fabricated by electroforming, due to the fact that the inner tube 2 is a unitary structure and has a throat 3 which is of reduced diameter, two divided outer tubes 1a and 1b are fitted over the inner tube 2 and are welded together. As a result, the outer tube, which is one of the most important elements in the strength of the combustor and nozzle arrangement, may be structurally unable to ensure the required strength and quality. Furthermore, the use of two divided outer tubes 1a and 1b fitted over the inner tube 2 and joined together by welding or the like results in an increase in the number of fabrication steps which in turn results in an increase in cost and time required for fabrication. Combustor and nozzle arrangements made by electroforming have the problem that a lengthy fabrication time is required and that control of the thickness of the plated layer is extremely difficult.

It is thus an object of the present invention to provide a combustor and nozzle for a high pressure burner for a rocket engine which includes an outer tube which is a unitary structure so as to produce a high and reliable strength of the combustor and nozzle arrangement. It is a further object to provide a method of fabricating such an arrangement which is both relatively cheap and relatively rapid.

According to the present invention a combustor and nozzle arrangement for a burner for a rocket engine comprises an inner tube which defines a nozzle throat between its ends and has a plurality of regenerative coolant grooves formed in its outer surface and is connected to an outer tube, the grooves cooperating with the outer tube to form regenerative coolant channels and is characterised in that the outer tube comprises a single prefabricated unit and the inner tube comprises two portions which are connected together at the nozzle throat.

According to a further aspect of the present invention a method of fabricating such a combustor and nozzle comprises providing an inner tube which defines a throat between its ends and has a plurality of regenerative coolant grooves formed in its outer surface, providing an outer tube around the inner tube and connecting the two tubes together and is characterised in that the outer tube comprises a single prefabricated unit, that the inner tube comprises two portions, that the two portions are press-fitted into the outer tube until they engage at the throat, that the portions are urged together by first jig means, that the outer tube is urged against the inner tube by second jig means and that the portions are connected together and to the outer tube simultaneously by diffusion bonding.

Further features, details and advantages of the invention will be apparent from the following description of a preferred embodiment which is given with reference to Figures 1 to 6 of the accompanying drawings; in which:

Figure 1 is a partly cut-away side elevation of a combustor and nozzle arrangement in accordance with the present invention;

Figure 2 is a sectional view taken on the line II–II in Figure 1;

Figures 3 and 4 are views illustrating the diffusion bonding step in the fabrication of a combustor and nozzle arrangement in accordance with the present invention;

Figure 5 is a view illustrating the testing of the joint after the diffusion bonding step; and

Figure 6 illustrates a pressure test of a regenerative coolant groove.

Figures 7 to 15 show prior art combustors as discussed above.

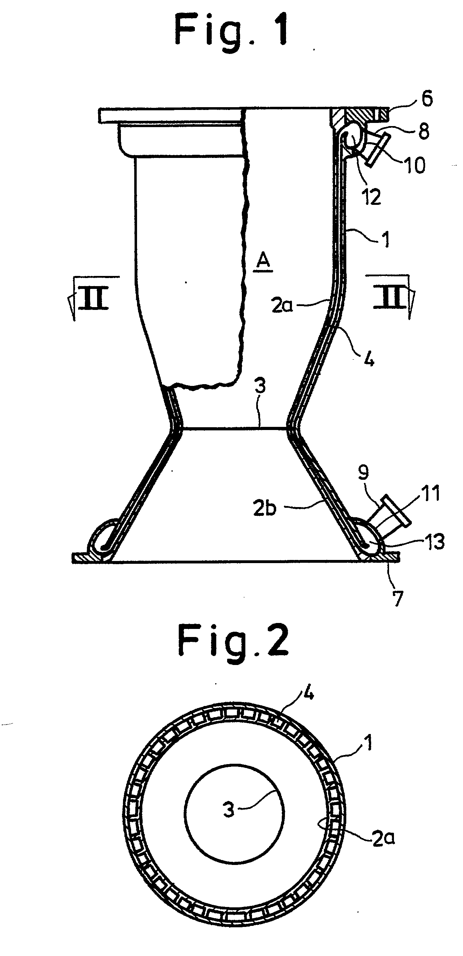

With reference to Figures 1 and 2, the combustor and nozzle comprise an inner tube 2 which has a plurality of regenerative coolant grooves 4 machined parallel to its axis in its outer surface and has a nozzle throat 3. The inner tube is therefore generally of conventional venturi shape. The inner tube 2 is divided perpendicular to its axis at the throat 3 into an upper inner tube 2a and a lower inner tube 2b. The upper and lower inner tubes 2a and 2b are inserted into the upper and lower ends, respectively, of an outer tube 1 which is a unitary structure and has a reduced-diameter portion or throat corresponding to the throat 3 of the inner tube 2 such that the upper and lower inner tubes 2a and 2b intimately contact one another at the throat 3 and are connected together. The contacting surfaces of the inner tubes 2a and 2b and the outer tube 1 are connected together to form a unitary structure comprising a combustor A defining regenerative coolant passages. The arrangement has an upper flange 6, a lower flange 7, a regenerative coolant discharge 8, a regenerative coolant inlet 9, an upper discharge manifold 10 defining an annular inlet space 12 and a lower inlet manifold 11 defining an annular inlet space 13.

Combustion gases flow downwardly through the combustor and nozzle axially thereof and the regenerative coolant (liquefied hydrogen) flows into the inlet 9, rises through the regenerative coolant passages 4 and flows out of the discharge 8 and is then used, for instance, for driving a turbine. The pressure produced by combustion in the combustor and nozzle arrangement A and the pressure in the regenerative coolant passage 4 are accommodated by the outer tube 1. Since the outer tube 1 has a unitary structure, it constitutes a rigid and stable component which is easily able to withstand the forces to which it is subjected. Unlike conventional arrangements, the outer tube 1 is not constructed as two members welded together whose mechanical integrity and strength is inherently deficient.

A preferred method of fabricating a combustor and nozzle in accordance with the present invention will now be described. In this embodiment the inner tube is made of copper containing no oxygen and the outer tube is made of CRES.

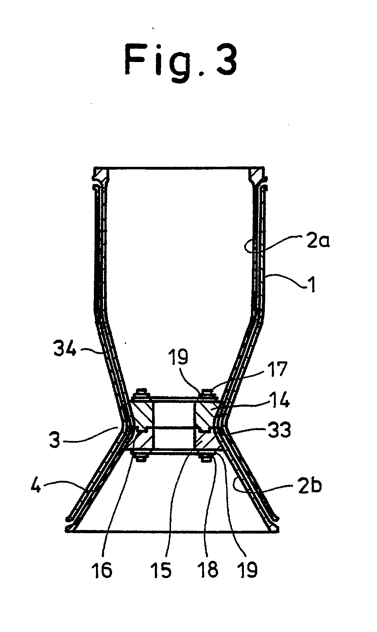

As shown in Figure 3, the upper and lower inner tubes 2a and 2b are first pressure-fitted into the unitary outer tube 1 until they engage at the throat. An upper flange or annular clamp 14 is placed in contact with the lower inner side of the upper inner tube 2a and a lower flange or annular clamp 15 is placed in contact with the upper inner side of the lower inner tube 2b. A copper sealing ring 16 is positioned between the clamps 14 and 15 and the intimate contact between the upper and lower inner tubes 2a and 2b at the throat 3 is confirmed by inspection. The clamps 14 and 15, which meet at the throat 3 and act as a jig, are tightened or urged together by clamping bolts and nuts 17 and 18 thereby urging the opposed surfaces of the inner tubes 2a and 2b together. Reference numeral 19 represents washers.

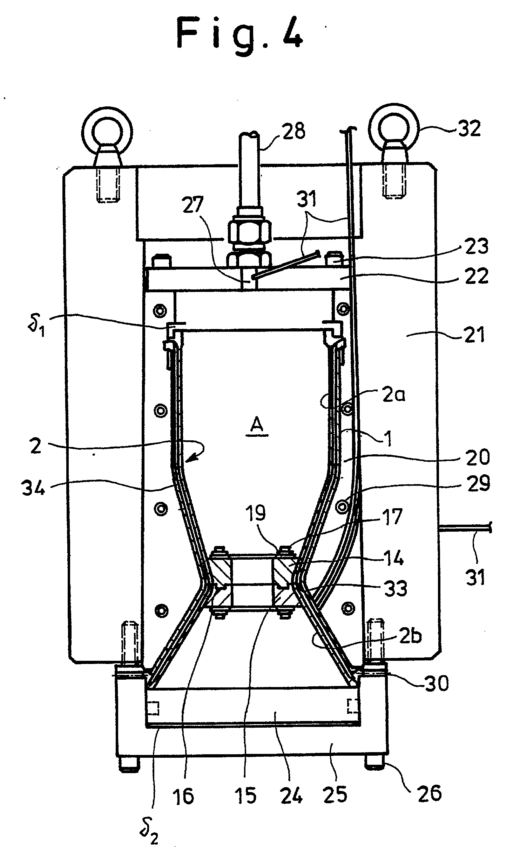

Thereafter, as shown in Figure 4, two divided sleeves 20 are fitted over the outer tube, and clamped together by horizontal bolts 29 to act as jigs for securely holding the outer tube 1 in position. A sleeve-retaining tapered cylinder 21 whose interior space diverges downwardly is fitted over the two sleeves 20 for neat abutment therewith and to retain them in position. An upper blind plate 22 is attached to the upper end of the sleeves 20 by jig-clamping bolts 23 and a lower blind plate 25 is attached through a spacer 24 to the lower end of the cylinder 21 with the interposition of a spacer 24 by jig-clamping bolts 26. An argon gas inlet 27 for injecting argon into the inner tube 2 is formed through the upper blind plate 22 and is connected to an argon gas injection pipe 28.

Reference numeral 30 denotes an argon gas discharge port for discharging argon gas which is subjected to forced circulation through the regenerative coolant grooves 4 during the diffusion bonding; 31 a temperature sensor; 32 eye bolts used for moving the tapered cylinder 20; and $\delta_1$ and $\delta_2$ indicate the clearances between the combustor and nozzle and the sleeves and between the spacer 24 and lower plate 25, respectively.

After the jigs have been positioned as shown in Figure 4, argon gas is introduced through the argon gas injection pipe 28 into the combustor and nozzle A and the regenerative coolant passages 4. The entire assembly is then lifted by means of the eye bolts 32 and placed in a heat-treatment furnace and heated at a predetermined temperature for a predetermined time. As a result of the difference in the coefficients of linear expansion of the clamping bolts 17 and the inner tubes, a pressure is exerted at the abutment surface 33 between the upper and lower inner tubes 2a and 2b. A pressure is also exerted by the introduced argon gas. As a result, very large forces are exerted at the abutment 33 between the inner upper and lower tubes 2a and 2b and at the abutment surfaces 34 between the inner and outer tubes 2 and 1 so that they are pressed firmly against each other. Consequently, the abutment surfaces are forced into intimate contact and subjected to elastic or plastic deformations. The metal atoms in the vicinity of the abutment surfaces diffuse across the abutments so that the abutment surfaces are integrally connected together.

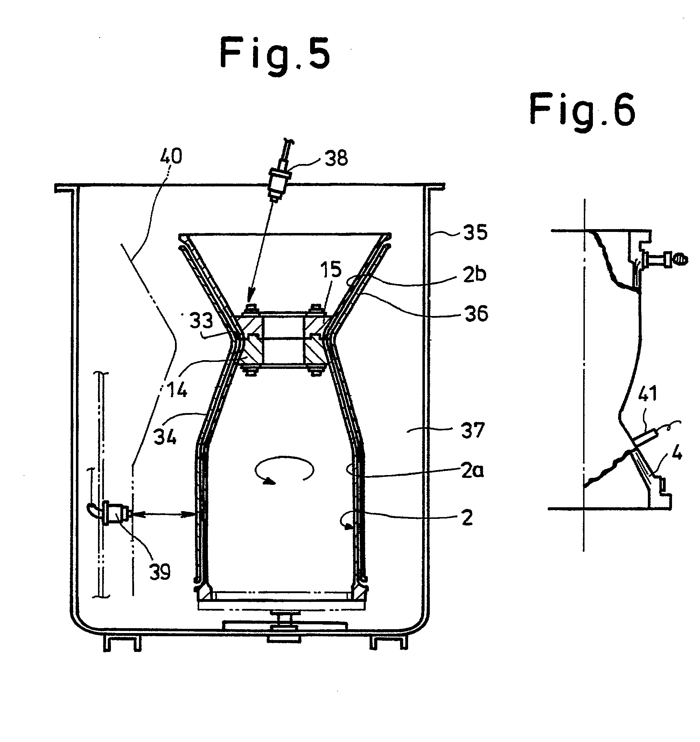

After the inner tubes 2a and 2b have been rigidly connected together and to the outer tube 1, the sleeves 20, the upper and lower blind plates 22 and 25 and the tapered cylinder 21 and so on are removed. The abutment surfaces 33 between the inner and outer tubes 2 and 1 are inspected and the air-tightness and ability to withstand pressure of the regenerative coolant passages 4 is tested. More particularly, to inspect the abutment surfaces 33 between the inner and outer tubes 2 and 1, the combustor and nozzle arrangement is turned upside down and immersed into a medium, such as water, in a bath 35, as shown in Figure 5, where it constitutes a test piece 36 which is subjected to the ultrasonic inspection. An ultrasonic probe 38 is used to inspect the abutment surface 33 between the inner tubes 2a and 2b. An ultrasonic probe 39 is scanned along scanning lines parallel to the axis of the outer tube 1 to inspect the abutment surfaces between the inner and outer tubes 2 and 1. When the junction conditions are found to be satisfactory after the inspections, the upper and lower clamps 14 and 15 at the throat 3 between the upper and lower inner tubes 2a and 3b are removed and the combustor and nozzle arrangement is shaped up at the throat.

To test the air-tightness of the regenerative coolant passages 4, helium gas is introduced into each of the regenerative coolant passages and its pressure is increased to find out whether or not gas leaks into the throat 3.

To pressure test the regenerative coolant passages 4, hydraulic pressure is applied to each of the regenerative coolant passages 4, as shown in Figure 6, and an AE (acoustic emission) sensor 41 is attached to the outer surface of the outer tube 1. The hydraulic pressure is increased while an inspector monitors the output of the AE sensor 41 to confirm that the diffusion bonded surfaces do not separate.

## Claims

1. A combustor and nozzle arrangement for a burner for a rocket engine comprising an inner tube (2) which defines a nozzle throat (3) between its ends and has a plurality of regenerative coolant grooves (4) formed in its outer surface and is connected to an outer tube (1), the grooves (4) cooperating with the outer tube (1) to form regenerative coolant channels characterised in that the outer tube (1) comprises a single prefabricated unit and the inner tube (2) comprises two portions (2a, 2b) which are connected together at the nozzle throat (3).

2. A combustor and nozzle arrangement as claimed in claim 1 characterised in that the two portions (2a, 2b) of the inner tube (2) are connected to one another and to the outer tube (1) by diffusion bonding.

3. A method of fabricating a combustor and nozzle arrangement for a burner for a rocket engine which comprises providing an inner tube (2) which defines a nozzle throat (3) between its ends and has a plurality of regenerative coolant grooves (4) formed on its outer surface, providing an outer tube (1) around the inner tube (2) and connecting the two tubes together, characterised in that the outer tube (1) comprises a single prefabricated unit, that the inner tube (2) comprises two portions (2a, 2b), that the two portions (2a, 2b) are press-fitted into the outer tube (1) until they engage at the nozzle throat (3), that the portions (2a, 2b) are urged together by first jig means (14, 15), that the outer tube (1) is urged against the inner tube (1) by second jig means (20, 21) and that the portions (2a, 2b) are connected together and to the outer tube (1) simultaneously by diffusion bonding.

4. A method as claimed in claim 3, characterised in that after completion of the diffusion bonding and removal of the first and second jig means (14, 15; 20, 21) the condition of the diffusion bonded regions is inspected and the gas-tightness and ability to withstand pressure of the regenerative coolant grooves (4) are tested.

## Patentansprüche

1. Brennkammer- und Düsenanordnung für einen Brenner eines Raketentriebwerks, die ein Innenrohr (2) umfaßt, welches eine Düseneinziehung (3) zwischen seinen Enden bestimmt und eine Vielzahl von in seiner Außenfläche ausgebildeten regenerativen Kühlmittelkehlen (4) aufweist sowie mit einem Außenrohr (1) verbunden ist, wobei die Kehlen (4) im Zusammenwirken mit dem Außenrohr (1) regenerative Kühlkanäle bilden, dadurch gekennzeichnet, daß das Außenrohr (1) eine einzige, vorgefertigte Einheit umfaßt und das Innenrohr (2) zwei Abschnitte (2a, 2b) enthält, die miteinander an der Düseneinziehung (3) verbunden sind.

2. Brennkammer- und Düsenanordnung nach Anspruch 1, dadurch gekennzeichnet, daß die zwei Abschnitte (2a, 2b) des Innenrohres (2) miteinander sowie mit dem Außenrohr (1) durch Diffusionsschweißen verbunden sind.

3. Verfahren zur Herstellung einer Brennkammer- und Düsenanordnung für einen Brenner eines Raketentriebwerks, das das Vorsehen eines Innenrohres (2), welches zwischen seinen Enden eine Düseneinziehung (3) bestimmt und eine Vielzahl von an seiner Außenfläche ausgebildeten regenerativen Kühlmittelkehlen (4) aufweist, das Vorsehen eines Außenrohres (1) rund um das Innenrohr (2) herum und das Verbinden beider Rohre miteinander einschließt, dadurch gekennzeichnet, daß das Außenrohr (1) eine einzige, vorgefertigte Einheit umfaßt, daß das Innenrohr (2) zwei Abschnitte (2a, 2b) aufweist, daß die zwei Abschnitte (2a, 2b) im Preßsitz in das Außenrohr (1) eingesetzt werden, bis sie an der Düseneinziehung aneinandertreffen, daß die Abschnitte (2a, 2b) durch erste Spannvorrichtungen (14, 15) zusammengespannt werden, daß das Außenrohr (1) durch zweite Spannvorrichtungen (20, 21) gegen das Innenrohr (2) gedrückt wird und daß die Abschnitte (2a, 2b) miteinander sowie mit dem Außenrohr (1) gleichzeitig durch Diffusionsschweißen verbunden werden.

4. Verfahren nach Anspruch 3, dadurch gekennzeichnet, daß nach Fertigstellung der Diffusionsverschweißung und Entfernen der ersten sowie zweiten Spannvorrichtungen (14, 15; 20, 21) der Zustand der durch Diffusion verbundenen Bereiche kontrolliert wird und die Gasdichtigkeit sowie Fähigkeit, einem Druck der regenerativen Kühlmittelkehlen (4) standzuhalten, geprüft werden.

## Revendications

1. Dispositif à chambre de combustion et à tuyère pour un brûleur de moteur de fusée, comprenant un tube intérieur (2) qui définit un col de tuyère (3) entre ses extrémités, qui comporte une pluralité de rainures (4) destinées à un agent refroidisseur à récupération et formée dans sa surface extérieure, et qui est relié à un tube extérieur (1), les rainures (4) coopérant avec le tube extérieur (1) pour former des canaux pour l'agent refroidisseur à récupération, caractérisé par le fait que le tube extérieur (1) comprend un ensemble préfabriqué unique, et que le tube intérieur (2) comprend deux parties (2a, 2b) qui sont reliées ensemble au col de la tuyère (3).

2. Dispositif à chambre de combustion et à tuyère selon la revendication 1, caractérisé par le fait que les deux parties (2a, 2b) du tube intérieur (2) sont reliées l'une à l'autre et au tube extérieur (1) par liaison par diffusion.

3. Procédé pour fabriquer un dispositif à chambre de combustion et à tuyère pour un brûleur de moteur de fusée selon lequel on dispose un tube intérieur (2) qui définit un col de tuyère (3) entre ses extrémités et qui comporte une pluralité de rainures (4) destinées à un agent refroidisseur à récupération et formées dans sa surface extérieure, on dispose un tube extérieur (1) autour du tube intérieur (2), et on relie ensemble les deux tubes, caractérisé par le fait que le tube extérieur (1) comprend un ensemble préfabriqué unique, que le tube intérieur (2) comprend deux parties (2a, 2b), que l'on ajuste par pression les deux parties (2a, 2b) dans le tube extérieur (1) jusqu'à ce qu'elles viennent en contact entre elles au col de la tuyère (3), que l'on serre l'une contre l'autre les deux parties (2a, 2b) par des premiers moyens à monture (14, 15), que l'on serre le tube extérieur (1) sur le tube intérieur (2) par des seconds moyens à monture (20, 21), et que l'on relie simultanément par liaison par diffusion les parties (2a, 2b) l'une à l'autre et au tube extérieur (1).

4. Procédé selon la revendication 3, caractérisé par le fait qu'après avoir terminé la liaison par diffusion et enlevé les premiers et les seconds moyens à monture (14, 15; 20, 21), on vérifie l'état des zones liées par diffusion et on teste l'étanchéité aux gaz et l'aptitude à résister à la pression des rainures (4) destinées à l'agent refroidisseur à récupération.

EP 0 284 410 B1

# Fig. 1

# Fig. 2

# Fig.3

# Fig. 4

# Fig.5

# Fig.6

# Fig. 7

# Fig. 8

# Fig.9

# Fig.10

# Fig.11

# Fig.12

# Fig.13

EP 0 284 410 B1

# Fig.14

# Fig.15